# EUROPEAN PATENT SPECIFICATION

(11) **EP 0 457 256 B1**
(45) Date of publication and mention of the grant of the patent: **03.08.1994**
(21) Application number: 91107751.9
(22) Date of filing: 14.05.1991
(51) Int. Cl.: A61J 1/05, B29C 65/00

(54) **Blood bag and method for producing the same**
Blutbeutel und Verfahren zu dessen Herstellung
Sac à sang et procédé pour sa fabrication

(30) Priority: 15.05.1990 JP 124829/90
(43) Date of publication of application: 21.11.1991
(73) Proprietor: NISSHO CORPORATION, Osaka-shi (JP)
(72) Inventor: Shimoda, Keitaro, Kusatsu-shi, Shiga-ken (JP); Matuta, Yositel, Odate-shi, Akita-ken (JP); Kawamoto, Shoji, Takatsuki-shi, Osaka-fu (JP); Tanaka, Norikazu, Otsu-shi Shiga-ken (JP); Futagawa, Hitoshi, Kusatsu-shi, Shiga-ken (JP)
(74) Representative: Türk, Gille, Hrabal, Leifert

(56) References cited:
- WO-A-84/02648
- FR-A- 653 773
- GB-A- 1 248 849
- US-A- 2 707 985

## Description

The invention relates to a method for producing a bag for storing blood or a suspension of cellular components of the blood such as red cells, white cells and blood platelets (hereafter referred to as blood bag), and a respective blood bag.

Blood is separated into ingredients according to various kinds of purposes, and blood separation is carried out by various kinds of methods. In general, centrifugal separation is employed for processing the blood under sterile conditions to obtain various blood components that may be desired. The currently available blood bags are made of synthetic resin. A conventional blood bag is obtained by putting one sheet made of synthetic resin over another sheet and sealing ends of two lapped sheets by welding or radio-frequency heating.

In conventional blood bags, however, there is a problem that cellular components of the blood adhere to an inside portion near the sealed edge in the blood bag and agglomerates of the components, particularly blood platelets, remain near the sealed edge, when the blood bag is shaken.

The reason for this problem is considered to be as follows.

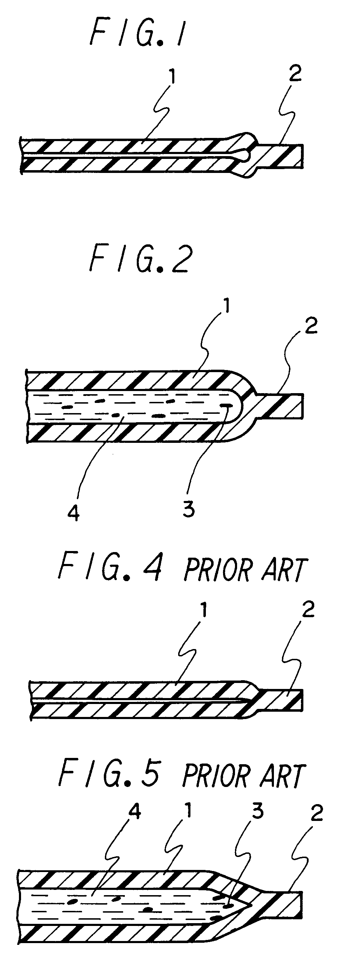

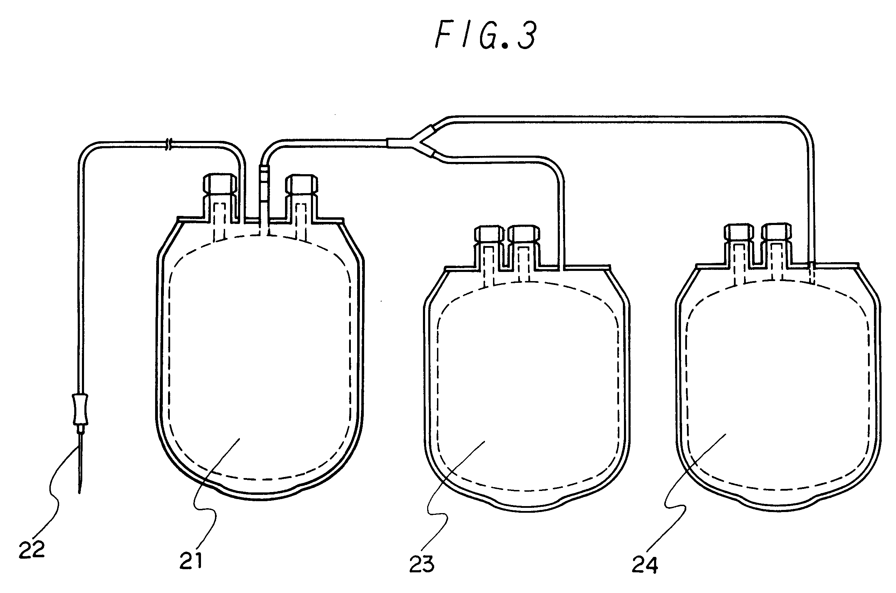

Figs. 4 and 5 are explanatory views of a sealed edge in a conventional blood bag. Fig. 4 shows a sealed edge of the blood bag wherein blood is not contained, and Fig. 5 shows a sealed edge of the blood bag wherein blood is contained. Two sheets 1 made of synthetic resin are adhered to each other at a sealed edge 2. When blood is not contained in the blood bag, one sheet 1 made of synthetic resin is merely placed upon another sheet as shown in Fig. 4 in such portion of the blood bag that is near a sealed edge 2. When blood 4 is contained in the blood bag, with two sheets 1 made of synthetic resin, the portion adjacent the sealed edge 2 is formed a V-shaped end of which valley portion is pointed to the sealed edge. The reason why the V-shaped end is formed is considered that ends of sheets are pressed during the sealing process.

Since a portion of the blood bag near the sealed edge is V-shaped, blood platelets 3 and the like collect in such V-shaped portion.

In a known method of sealing an polyethylene film (GB-A-1 248 849) the sealed edge of a bag made from two parallel polyethylene films is made in a round shape in order to prevent splitting of the sealed portion when heavy material is contained in the bag. However, when such bag is filled with fluid material the space within the bag has a V-shaped configuration as shown in Fig. 5 so that also such bag is not suitable for storing blood or the like without the problem that ingredients of blood remain near the sealed edges of the blood bag.

It is the object of the present invention to produce and provide blood bags which can solve the above-mentioned problem that ingredients of blood remain near a sealed edge of a blood bag.

This object is solve by a method with the features of claim 1 and a blood bag with the features of claim 2.

In accordance with the present invention, there is produced and provided a blood bag comprising two sheets made of polyolefine wherein peripheral portions of the sheets are welded to form a sealed edge wherein a U-shaped clearance is formed inside the bag adjacent the sealed edge by blowing gas through an opening of the bag immediately after forming the sealed edge.

In the drawings
Fig. 1 is an explanatory view of a sealed edge of a blood bag of the present invention wherein blood is not contained,
Fig. 2 is an explanatory view of a sealed edge of a blood bag of the present invention wherein blood is contained,
Fig. 3 is an explanatory view of blood bags used in Experiment 1,
Fig. 4 is an explanatory view of a conventional blood bag, wherein blood is not contained, and
Fig. 5 is an explanatory view of a conventional blood bag, wherein blood is contained.

Next, a blood bag of the present invention is explained in detail.

In a blood bag of the present inveniton, sheets which constitute a bag are made of polyolefine such as polyethylene and polypropylene. In order to make a bag, peripheral portions of the sheets are welded to form a sealed edge. The bag has a substantial clearance inside the bag adjacent the sealed edge. The expression "substantial clearance adjacent the sealed edge" is explained based on the accompanying drawing.

Fig. 1 is an explanatory view of a sealed edge of a blood bag of the present invention wherein blood is not contained, and Fig. 2 is an explanatory view of a sealed edge of a blood bag of the present invention wherein blood is contained. Two sheets 1 made of polyolefine are welded at peripheral portions thereof to form a sealed edge 2. As shown in Fig. 1, the bag has a bulged portion adjacent the sealed edge 2. In other words, two sheets 1 are not merely lapped together near the sealed edge 2 when blood is not contained in the bag, and a substantial clearance is formed inside the bag adjacent the sealed edge.

When blood is contained in the bag, the two sheets 1 made of polyolefine form a U-shaped end adjacent the sealed edge 2. The valley portion of the U-shaped end is pointed to the sealed edge 2.

Thanks to the U-shaped end at the sealed portion, blood platelets 3 and the like do not remain near the sealed edge.

Next, the method for producing a blood bag which forms a U-shaped end when blood is contained in the bag is explained.

Firstly, two sheets made of polyolefine are lapped together and peripheral portions of two sheets are welded to form a sealed edge. Immediately after the welding step, gas such as pressurized air is blown into the bag through an opening of the bag (post seal inflation, hereafter referred to as PSI). Conditions for PSI are temperature of polyolefine sheets during sealing step, timing for blowing gas into the bag after sealing step, blowing time, and pressure of blown gas. That is, temperature, time and pressure should be taken into consideration in PSI. The temperature is properly controlled above softening point and below melting point of the material. The time (inflation time which includes time for inflating a bag and maintaining the inner pressure of the bag) is properly controlled to be in a range of 2 to 10 seconds. The inflation is performed at the lowest possible pressure in consideration of strength of the bag.

In a PSI step in the present invention, a pair of holding plates can be used in order to control a degree of bulge of a bag from both sides of the bag.

### Example 1 and Comparative Example 1

54 % (weight %, hereafter the same) of KRATON G-1650 (poly(ethylenebutylene) polystyrene block copolymer produced by Shell Chemical Co., Ltd.), 23 % of FL-6711N (polypropylene produced by Sumitomo Chemical Company, Limited) and 23 % of DPDJ-6182 (ethylene ethylacrylate containing 15 mol % of ethylacrylate produced by Nippon Unicar Co., Ltd.) were mixed with a mixer, and then melted at 200°C. Melted mixture was extruded to produce undrawn sheets each having a thickness of 250 µm.

Using the obtained sheets, blood bags were produced with a heating mold.

A tube protector case containing a tube coated with a film, and a discharge port are inserted between two sheets each having an area of about 125 cm². A portion having the discharge port of lapped sheets was welded with a pair of metal molds (an upper mold and a lower mold) heated up to 180°C.

Next, another portion of lapped sheets was welded to complete the sealing with a metal mold heated up to 150°C. Immediately after welding, pressurized air of 0.1 kg/cm² was blown into an obtained bag through the discharge port for about two seconds as PSI, and then an inner pressure of the bag was maintained for four seconds. Thereafter, the blown air was discharged spontaneously. A suspension hole was made on one end of the bag opposite to an end to which the discharge port was provided.

A blood bag to which PSI was not applied was produced as Comparative Example 1.

The sealed portion was cut at not less than ten places with respect to both the bag of Example 1 and the bag of Comparative Example 1, and cross sections of cut portions were observed with naked eyes. As a result of observation, most of cut portions in the bag of Example 1 had bulged portions as shown in Fig. 1 while cut portions in the bag of Comparative Example 1 have non-bulged portions as shown in Fig. 4.

500 mg of iron powder having a particle size of 5 to 250 µm and 40 mℓ of water were charged into the blood bags of Example 1 and Comparative Example 1, respectively, to carry out simulation experiment instead of blood. Shaking (stroke: 30 mm, frequency: 150 times per second) was given to laid bags. The behavior of collection of iron powder in the peripheral portion of the blood bag was observed. Iron powder was collected in the peripheral portion of the blood bag of Comparative Example 1, while such collection was not observed in the case of the blood bag of Example 1.

When the blood bags used in the above-mentioned simulation experiment were suspended with the use of the suspension holes, iron-powder-dispersing water rapidly fell due to a bulged portion in the periphery in the case of the blood bag of Example 1, while iron-powder-dispersing water slightly remained within the blood bag in the case of the blood bag of Comparative Example 1.

### Experiment 1 and Comparative Example 1

Ten blood bags for collecting blood (capacity: 400 mℓ) shown in Fig. 3 were produced. In Fig. 3, numeral 21 is a parent bag made of polyvinylchloride and containing 56 mℓ of CPD liquid (2.63 g of sodium citrate, 0.327 g of citric acid, 2.32 g of dextroglucose, and 0.251 g of sodium dihydrogenphosphate dihydrate are contained per 100 mℓ of CPD) therein. The parent bag 21 has a blood-collecting-needle 22. Numeral 23 is a polyolefine bag of Example 1, and numeral 24 is a bag mace of polyvinylchloride. Both bags 23, 24 are connected to the parent bag 21 through tubes.

Further ten blood bags were produced in the same manner as described above to use in Comparative Experiment 1, except that bulged portions were not formed near the welced portions.

A triple bag containing 400 mℓ of collected blood was centrifuged at 1900 G for five minutes. Supernatant (plasma which is rich in blood platlets) was moved to an olefine bag, and the parent bag was separated from the other bags. After second centrifugation operation at 3500 G for five minutes, supernatant (plasma which is poor in blood platelets) was moved to a child bag 24, and the two bags 23, 24 were separated from each other. About 40 mℓ of blood platelets (PC) was collected in the olefine bag 23.

After the olefine bag 23 containing PC was left for one hour, the bag was shaken horizontally at a frequency of 100 reciprocations per minute for one hour and then at a frequency of 60 reciprocations per minute for about 12 hours to disperse blood platelets into plasma.

The behavior of dispersion of blood platelets was observed with respect to ten olefine bags of Experiment 1 and ten olefine bags of Comparative Experiment 1.

Among ten olefine bags of Experiment 1, blood platelets were perfectly dispersed for seven bags and very small masses of blood platelets having a diameter of about 1 mm were present for three bags. PC in all bags had quality allowing transfusion into human body.

On the other hand, in the case of olefine bags of Comparative Experiment 1, there was no bag in which blood platelets were perfectly dispersed. Among ten olefine bags, a very small amount of masses of blood platelets having a diameter of about 1 mm was observed for two bags, and a very small amount of masses of blood platelets having a diameter of about 2 mm was observed for four bags. PC in these six bags had quality allowing transfusion into human body. The residual four bags contained agglomerates having a diameter of not less than 3 mm, and accordingly PC in these four bags did not have quality allowing transfusion into human body.

Since PSI is applied to a blood bag of the present invention, there is formed a bulged portion very near a sealed edge, and there is formed a U-shaped end very near the sealed edge of which valley portion is pointed to the sealed edge.

Since the U-shaped end is formed adjacent the sealed edge, blood platelets and the like hardly remain near the sealed edge. Further, little liquid remains within the blood bag when the content of the blood bag is exhausted.

## Claims

1. Method for producing a blood bag, comprising welding together peripheral portions of two sheets (1) made of polyolefine to form a sealed edge portion (2),
**characterized in that**
gas is blown into the bag through an opening of the bag so as to inflate the bag immediately after forming the sealed edge portion and while the temperature of the sheet material is above the softening point and below the melting point of the material, whereby a U-shaped end is formed between the sheets adjacent the sealed edge portion (2).

2. Blood bag produced by method of claim 1, comprising two sheets (1) made of polyolefine, wherein peripheral portions of the lapped sheets are welded to form a sealed edge (2), characterized in that a U-shaped bulged clearance is provided inside the bag adjacent the sealed edge.

## Patentansprüche

1. Verfahren für die Herstellung eines Blutbeutels, bei dem die peripheren Abschnitte von zwei aus Polyolefin hergestellten Folien (1) miteinander verschweißt werden, um einen versiegelten Kantenbereich (2) zu bilden,
**dadurch gekennzeichnet, daß**
durch eine Öffnung des Beutels ein Gas in den Beutel geblasen wird, um diesen Beutel unmittelbar nach der Herstellung des versiegelten Kantenbereiches aufzublasen, während die Temperatur des Folienmaterials über dem Erweichungspunkt und unterhalb des Schmelzpunktes des Materials liegt, wodurch zwischen den Folien in der Nähe des versiegelten Kantenbereiches ein U-förmiges Ende ausgebildet wird.

2. Verfahren nach Anspruch 1 für die Herstellung eines Blutbeutels mit Hilfe von zwei aus Polyolefin hergestellten Folien (1), bei dem die peripheren Abschnitte der überlagerten Folien verschweißt werden, um einen versiegelten Kantenbereich (2) zu bilden,
**dadurch gekennzeichnet, daß**
innerhalb des Beutels an dem versiegelten Kantenbereich ein U-förmig ausgebauchter Freiraum vorgesehen ist.

## Revendications

1. Procédé pour la fabrication d'un sac à sang, comprenant le soudage ensemble de parties périphériques de deux feuilles (1), faites à base de polyoléfine, pour former une partie de bord soudée (2),
caractérisé en ce que
du gaz est insufflé dans le sac, à travers une ouverture du sac, de manière à gonfler le sac immédiatement après formation de la partie de bord soudée et pendant que la température du matériau en feuille est au-dessus du point de ramollissement et au-dessous du point de fusion de la matière, ce par quoi une extrémité en forme de U est formée entre les feuilles, adjacente à la partie de bord soudée (2).

2. Sac à sang fabriqué par le procédé à la revendication 1, comprenant deux feuilles (1), faites à base de polyoléfine, dans lequel des parties périphériques des feuilles en recouvrement sont soudées pour former un bord soudé (2), caractérisé en ce qu'un espace bombé en forme de U est créé à l'intérieur du sac, adjacent au bord soudé.
